# EUROPÄISCHE PATENTANMELDUNG

(11) **EP 1 932 936 A1**
(43) Veröffentlichungstag der Anmeldung: **18.06.2008**
(21) Anmeldenummer: 06026084.1
(22) Anmeldetag: 15.12.2006
(51) Int. Cl.: C23C 4/12, C23C 28/00, C04B 41/45, F01D 5/28

(54) **Verfahren zum Beschichten eines Bauteils**

(71) Anmelder: SIEMENS AKTIENGESELLSCHAFT, 80333 München (DE)
(72) Erfinder: Berndt, Thomas, 12524 Berlin (DE); Ladru, Francis-Jurjen, Dr., 10629 Berlin (DE); Mensing, Marcus, 13465 Berlin (DE); Reich, Gerhard, 10717 Berlin (DE); Stadelmaier, Falk, 10559 Berlin (DE)

(57) **Zusammenfassung**

Die Erfindung betrifft ein Verfahren zum Beschichten eines Bauteils mit einer mehrlagigen Keramikschicht, bei dem einzelne Lagen der Keramikschicht auf dem Bauteil deckend übereinander aufgebracht werden, in dem Keramikpartikel einem Beschichtungsbrenner zugeführt werden, von diesem ganz oder teilweise aufgeschmolzen und auf dem Bauteil abgeschieden werden, wobei dem Beschichtungsbrenner von Lage zu Lage Keramikpartikel mit einer zunehmend größeren Körnung zugeführt werden. Weiterhin betrifft die Erfindung eine mehrlagige Keramikschicht und ein Bauteil, welches mit einer mehrlagigen Keramikschicht versehen ist.

## Beschreibung

Die Erfindung betrifft ein Verfahren zum Beschichten eines Bauteils mit einer mehrlagigen Keramikschicht, bei dem einzelne Lagen der Keramikschicht auf dem Bauteil deckend übereinander aufgebracht werden, indem Keramikpartikel einem Beschichtungsbrenner zugeführt, von diesem ganz oder teilweise aufgeschmolzen und auf dem Bauteil abgeschieden werden. Die Erfindung betrifft weiterhin eine mehrlagige Keramikschicht und ein Bauteil, das mit einer mehrlagigen Keramikschicht versehen ist.

Bauteile, die in einer aggressiven Atmosphäre in einem Temperaturbereich von größer als 800°C eingesetzt werden, sind häufig mit Schutzbeschichtungen versehen, um deren Lebensdauer zu verlängern. So werden beispielsweise Gasturbinenlauf- oder -leitschaufeln mit keramikhaltigen Wärmedämmschichten versehen bzw. es werden komplexe Schichtsysteme aufgebracht, welche die Schaufeln vor thermischen, chemischen und mechanischen Beanspruchungen schützen.

Die keramikhaltigen Wärmedämmschichten können beispielsweise Zirkonoxide enthalten, die durch Yttriumoxide stabilisiert sind. Als Verfahren zur Auftragung wird unter anderem Plasmaspritzen eingesetzt. Dabei werden pulverförmige Keramikpartikel einem Plasmabeschichtungsbrenner zugeführt, in dem sie ganz oder teilweise aufgeschmolzen und anschließend auf dem Bauteil abgeschieden werden. Die Keramikpartikel bilden dann auf der Oberfläche des Bauteils die Wärmedämmschicht.

In vielen Fällen wird die Wärmedämmschicht in einzelnen deckend übereinander aufgebrachten Lagen auf dem Bauteil ausgebildet, d.h. es werden bei einer Standartschichtdicke von 200 - 400 *µ*m 4 - 15 Lagen mit einer Lagendicke von 20 - 50 *µ*m übereinander aufgebracht.

Ein Verfahren zur Ausbildung von mehrlagigen Wärmedämmschichten auf der Oberfläche von Turbinenschaufeln ist in der DE 100 22 157 C1 beschrieben. Hier werden pulverförmige Keramikpartikel dem Beschichtungsbrenner zugeführt, dort ganz oder teilweise aufgeschmolzen und anschließend in der Form einzelner Lagen auf der Oberfläche der Turbinenschaufel abgeschieden. Dabei werden Keramikpartikel mit unterschiedlich großer Körnung verwendet, wobei die Keramikpartikel durch eine geeignete Steuerung der Brennerleistung in Abhängigkeit von ihrer Größe unterschiedlich stark aufgeschmolzen werden, d.h. die kleineren Keramikpartikel schmelzen vollständig und die größeren Keramikpartikel sind nur oberflächlich angeschmolzen. Auf diese Weise kann die Porosität der einzelnen Lagen der Wärmedämmschicht variiert werden.

Die im Stand der Technik bekannten Keramikschichten haben eine Gesamtdicke, die nicht oberhalb von 450 µm liegt. Dies ist unter anderem dadurch begründet, dass bei der Herstellung von keramischen Wärmedämmschichten mit einer größeren Dicke verschiedene Probleme auftreten.

Wenn die Wärmedämmschicht durch Aufbringen von einzelnen übereinander liegenden Lagen ausgebildet wird, isolieren die bereits auf der Bauteiloberfläche vorhandenen Lagen während des Auftragungsprozesses zunehmend stärker derart, dass das neu aufgebrachte Beschichtungsmaterial der weiteren Lagen seine Wärme nicht abgeben kann. Es kommt zu einem Wärmestau, in dessen Folge die Temperatur der neu aufgebrachten Lagen zunimmt, was dazu führt, dass diese stärker verdichtet werden. Durch diese Verdichtung nimmt jedoch die Porosität der einzelnen Lagen ab, was einerseits deren Wärmeisolationsfähigkeit während des Betriebes des Bauteils reduziert und andererseits eine wesentlich schlechtere Haftung der Lagen aneinander hervorruft. Dies kann unter anderem dazu führen, dass es zu einem Schichtversagen kommt, d.h. es besteht die Gefahr des lokalen Abplatzens von Bereichen der keramischen Wärmedämmschicht.

Es ist daher Aufgabe der vorliegenden Erfindung, ein Verfahren der eingangs genannten Art so auszubilden, dass mehrlagige Keramikschichten mit einer Dicke größer als 450 µm auf einem Bauteil aufgebracht werden können. Dabei soll das Bauteil mit den einzelnen Lagen so beschichtet werden, dass diese eine ausreichende Porosität erhalten, wodurch sowohl eine hohe Wärmeisolationsfähigkeit als auch eine gute Haftfähigkeit der Lagen aneinander sichergestellt wird.

Diese Aufgabe wird dadurch gelöst, dass dem Beschichtungsbrenner von Lage zu Lage Keramikpartikel mit einer zunehmend größeren Körnung zugeführt werden.

Grundgedanke der Erfindung ist es also die Körnung der Keramikpartikel von Lage zu Lage zu erhöhen. Zunächst wird das Bauteil mit einer ersten Lage beschichtet, indem dem Beschichtungsbrenner Keramikpartikel mit der kleinsten insgesamt verwendeten Körnung, beispielsweise - 53 µm + 11 µm zugeführt werden. Um dann eine zweite Lage auf der ersten Lage aufzubringen, werden dem Beschichtungsbrenner Keramikpartikel mit einer Körnung zugeführt, die größer als die der Keramikpartikel für die erste Lage ist. Anschließend werden analog die weiteren Lagen unter stetiger Zunahme der Körnung der verwendeten Keramikpartikel aufgebracht.

Vorteilhaft ist hierbei, dass durch die Erhöhung der Körnung der Keramikpartikel von Lage zu Lage dem Effekt des Verdichtens der einzelnen Lagen mit zunehmender Schichtdicke aufgrund des auftretenden Wärmestaus entgegengewirkt wird. So werden die einzelnen Lagen mit einer nahezu konstanten Porosität ausgebildet, was einerseits deren Wärmeisolationsfähigkeit bewahrt und andererseits die Haftung der einzelnen Lagen aneinander sicherstellt. Auf diese Weise wird auch die Gefahr eines Schichtversagens ausgeschlossen.

Gemäß einer ersten Ausführungsform der Erfindung ist vorgesehen, dass die Leistung des Beschichtungsbrenners während des Aufbringens der einzelnen Lagen der Keramikschicht kontinuierlich an die Körnung der Keramikpartikel angepasst wird. Auf diese Weise ist es möglich während des Beschichtungsvorgangs die Porosität der einzelnen Lagen noch genauer zu steuern, bzw. zu modifizieren. Durch die Anpassung der Brennerleistung kann insbesondere beeinflusst werden, wie stark die Keramikpartikel aufgeschmolzen werden.

Es ist ebenfalls möglich als Beschichtungsbrenner einen Plasmabrenner zu verwenden. In diesem Fall kann die Leistung des Plasmabrenners beispielsweise durch die Variation der Stromstärke und/oder des Wasserstoffgasflusses und/oder der Argongasrate angepasst werden. So kann eine Stromstärke von 500 - 650 A, ein Wasserstoffgasfluss von 12 - 16 NLPM und eine Argongasrate von 40 - 60 NLPM eingestellt werden. Gegebenenfalls können auch Gasmischungen aus Argon, Stickstoff und Wasserstoff verwendet werden, wobei insbesondere Mischungsverhältnisse Ar/N₂/H₂ von 30-40/10-20/8-14 zum Einsatz kommen können.

Die einzelnen Lagen der Keramikschicht können mit einer Dicke im Bereich zwischen 10 und 100 µm aufgebracht werden, wobei insbesondere eine Dicke zwischen 20 - 50 µm geeignet ist. Auf diese Weise wird eine Keramikschicht erhalten, die eine hohe Wärmeisolationsfähigkeit besitzt und mechanisch stabil ist.

Bei einer weiteren Ausführungsform kann die mehrlagige Keramikschicht mit einer Gesamtdicke im Bereich zwischen 100 - 1000 µm, insbesondere zwischen 200 und 700 µm besonders bevorzugt zwischen 250 und 600 µm aufgebracht werden.

Dem Beschichtungsbrenner können für die erste Lage beispielsweise Keramikpartikel mit einer Körnung von - 75 µm + 10 µm oder - 53 µm + 11 µm oder - 90 µm + 11 µm zugeführt werden.

Für die Aufbringung der letzten Lage, d.h. der äußersten Lage der mehrlagigen Keramikschicht, können dem Beschichtungsbrenner Keramikpartikel mit einer Körnung von - 106 µm + 11 µm oder - 125 µm + 45 µm oder - 150 µm + 75 µm zugeführt werden.

Weiterhin kann dem Beschichtungsbrenner auch ein Gemisch von Keramikpartikel mit mindestens zwei verschiedenen Körnungen zugeführt werden. Durch ein geeignetes Mischen der beiden verschieden gekörnten Keramikpartikelfraktionen kann in einfacher Weise die Gesamtkörnung der dem Beschichtunqsbrenner zugeführten Keramikpartikel variiert werden.

Es ist ebenfalls möglich, vor dem Beschichten mit der mehrlagigen Keramikschicht eine mehrlagige Unterschicht auf dem Bauteil aufzubringen, indem Keramikpartikel mit einer konstanten Körnung einem Beschichtungsbrenner zugeführt, von diesem ganz oder teilweise aufgeschmolzen und auf dem Bauteil in einzelnen Lagen deckend übereinander abgeschieden werden. Anschließend wird auf der Unterschicht die mehrlagige Keramikschicht ausgebildet.

Dem Beschichtungsbrenner können für die Unterschicht Keramikpartikel mit einer konstanten Körnung von - 75 µm + 10 µm oder - 53 µm + 11 µm oder - 90 µm + 11 µm zugeführt werden. Außerdem können die einzelnen Lagen der Unterschicht mit einer Dicke im Bereich von 10 - 100 µm, insbesondere zwischen 20 - 50 µm aufgebracht werden. Die Gesamtdicke der Unterschicht kann im Bereich zwischen 150 und 450 µm liegen.

Es ist ebenfalls möglich, dass auf der mehrlagigen Keramikschicht eine mehrlagige Oberschicht aufgebracht wird, indem Keramikpartikel einem Beschichtungsbrenner zugeführt, von diesem ganz oder teilweise aufgeschmolzen und auf der mehrlagigen Keramikschicht in einzelnen Lagen deckend übereinander aufgebracht werden. Dabei weisen die Keramikpartikel für die Oberschicht eine größere Körnung als die Keramikpartikel, welche dem Beschichtungsbrenner zum Aufbringen der letzten Lage der mehrlagigen Keramikschicht zugeführt werden, auf.

Die erfindungsgemäße Aufgabe wird ebenfalls durch eine mehrlagige Keramikschicht mit den Merkmalen des Anspruchs 14 und durch ein Bauteil mit den Merkmalen des Anspruchs 24 gelöst.

Im Folgenden wird die Erfindung anhand eines Ausführungsbeispiels unter Bezugnahme auf die Zeichnung näher erläutert. In der Zeichnung zeigt:
- Figur 1: eine schematische Teilschnittansicht einer Turbinenschaufel mit einer erfindungsgemäßen mehrlagigen Keramikschicht, und
- Figur 2: eine schematische Darstellung einer Vorrichtung zum Beschichten eines Bauteils,
- Figur 3: eine Gasturbine,
- Figur 4: perspektivisch eine Turbinenschaufel und
- Figur 5: eine Brennkammer.

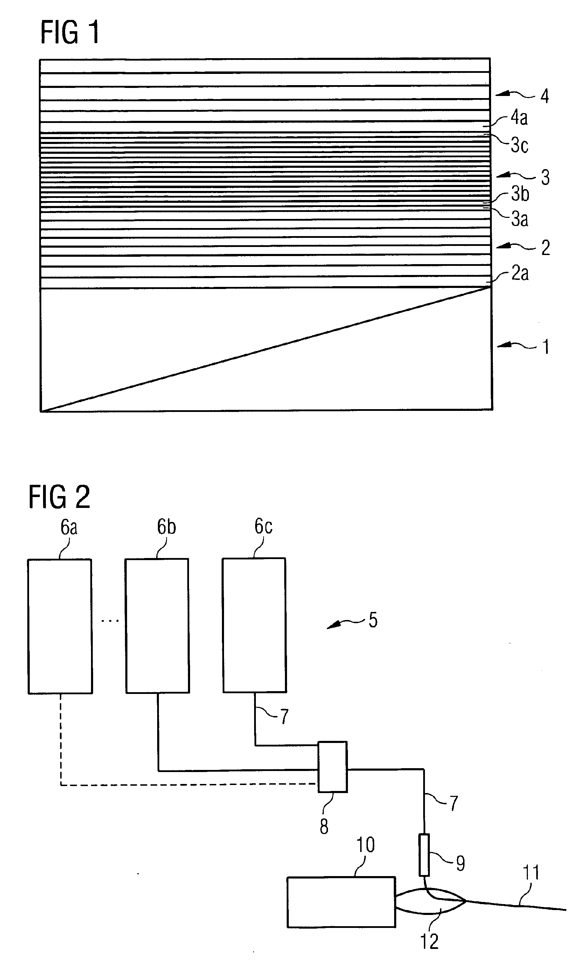

In der Figur 1 ist eine schematische Teilschnittansicht einer Turbinenschaufel 1 gezeigt, die mit einer erfindungsgemäßen mehrlagigen Keramikschicht 3 flächig beschichtet ist. Unter der mehrlagigen Keramikschicht 3 auf der Turbinenschaufel 1 ist eine mehrlagige Unterschicht 2 ausgebildet und auf der mehrlagigen Keramikschicht 2 befindet sich eine mehrlagige Oberschicht 4. Die Unterschicht 2, die mehrlagige Keramikschicht 3 und die Oberschicht 4 werden jeweils von deckend übereinander angeordneten Lagen 2a, 3a-c, 4a gebildet.

Die Unterschicht 2 ist unmittelbar auf der Turbinenschaufel 1 aufgebracht. Die Lagen 2a der Unterschicht 2 bestehen aus teilweise miteinander verschmolzenen Keramikpartikeln mit einer konstanten Körnung, wobei die Körnung - 75 µm + 10 µm oder - 53 µm + 11 µm oder - 90 µm + 11 µm sein kann. Die Lagen 2a der Unterschicht 2 haben eine Dicke im Bereich zwischen 10 - 100 µm, insbesondere zwischen 20 - 50 µm. Die Gesamtdicke der Unterschicht 2 liegt zwischen 150 und 450 µm.

Auf der Unterschicht 2 ist die mehrlagige Keramikschicht 3 flächig aufgebracht. Die einzelnen Lagen 3a, 3b, 3c der mehrlagigen Keramikschicht 3 bestehen aus teilweise miteinander verschmolzenen Keramikpartikeln, wobei die Keramikpartikel von Lage zu Lage zunehmend eine größere Körnung aufweisen. D.h. die teilweise miteinander verschmolzenen Keramikpartikel der ersten Lage 3a haben eine kleinere Körnung als die teilweise miteinander verschmolzenen Keramikpartikel der zweiten Lage 3. Die beiden Lagen 3a, 3b weisen jedoch eine etwa gleiche Porosität auf, so dass beide eine hohe Wärmeisolationsfähigkeit besitzen und eine starke Haftung der Lagen 3a, 3b aneinander gewährleistet ist.

Die Lagen 3a, 3b, 3c haben eine Dicke im Bereich zwischen 10 - 100 µm, insbesondere zwischen 20 - 50 µm. Die Gesamtdicke der mehrlagigen Keramikschicht 3 liegt im Bereich zwischen 100 - 1000 *µ*m, insbesondere zwischen 200 und 700 *µ*m und besonders bevorzugt zwischen 250 und 650 *µ*m.

Auf der mehrlagigen Keramikschicht 3 ist die mehrlagige Oberschicht 4 flächig aufgebracht. Die Oberschicht 4 wird von den übereinander angeordneten Lagen 4a gebildet, welche aus teilweise miteinander verschmolzenen Keramikpartikeln bestehen. Die Körnung dieser Keramikpartikel ist größer als die Körnung der Keramikpartikel der letzten Lage 3c der mehrlagigen Keramikschicht 3.

Die mehrlagige Keramikschicht 3 hat einerseits eine hohe Wärmeisolationsfähigkeit und besitzt andererseits eine große mechanische Stabilität, so dass die Gefahr des Schichtversagens reduziert ist.

Um die Turbinenschaufel 1 zu beschichten, wird in einem ersten Schritt die Unterschicht 2 Lage für Lage auf der Oberfläche der Turbinenschaufel 1 aufgebracht. Dazu werden Keramikpartikel mit einer konstanten Körnung einem Beschichtungsbrenner zugeführt, von diesem ganz oder teilweise aufgeschmolzen und dann auf der Turbinenschaufel in den einzelnen Lagen 2a deckend übereinander abgeschieden.

In einem zweiten Schritt wird dann auf der Unterschicht 2 die mehrlagige Keramikschicht 3 aufgebracht. Dazu werden dem Beschichtungsbrenner Keramikpartikel zugeführt, welche von diesem ganz oder teilweise aufgeschmolzen und dann in Form der Lagen 3a, 3b, 3c abgeschieden werden.

In den Beschichtungsbrenner können für die erste Lager der mehrlagigen Keramikschicht 3 beispielsweise Keramikpartikel mit einer ersten Körnung von - 75 µm + 10 eingebracht werden.

Die erste Lage 3a wird auf der Oberfläche der Unterschicht 2 und die zweite Lage 3b unmittelbar deckend auf der ersten Lage 3a aufgebracht. Dabei werden von Lage zu Lage dem Beschichtungsbrenner Keramikpartikel mit einer zunehmend größeren Körnung zugeführt. D.h. die Keramikpartikel, die dem Beschichtungsbrenner für die Ausbildung der Lage 3b zugeführt werden, haben eine größere Körnung als die Keramikpartikel, die dem Beschichtungsbrenner für die Ausbildung der Lage 3a zugeführt werden. Die Keramikpartikel mit der größten für die mehrlagige Keramikschicht 3 verwendeten Körnung werden schließlich von dem Beschichtungsbrenner ganz oder teilweise aufgeschmolzen, wenn die letzte Lage 3c abgeschieden wird.

Die Variation der Körnungen der Keramikpartikel kann beispielsweise dadurch erfolgen, dass dem Beschichtungsbrenner gleichzeitig Keramikpartikel mit mindestens zwei verschiedenen Körnungen zugeführt werden. Dabei kann durch geeignetes Mischen der beiden Körnungen eine jeweils zunehmende Gesamtkörnung erhalten werden.

Außerdem kann die Leistung des Beschichtungsbrenners kontinuierlich an die Körnung der Keramikpartikel angepasst werden. So kann die Leistung erhöht werden, wenn zunehmend größere Keramikpartikel abgeschieden werden sollen. Auf diese Weise wird sichergestellt, dass auch die größeren Keramikpartikel hinreichend aufgeschmolzen sind, um fest in die Lagen 3a, 3b, 3c mit eingebunden zu werden.

Wenn ein Plasmabrenner als Beschichtungsbrenner verwendet wird, kann dessen Leistung durch Variation der Stromstärke und/oder des Wasserstoffgasflusses und/oder der Argongasrate angepasst werden.

In einem letzten Schritt wird flächig deckend auf der mehrlagigen Keramikschicht 3 die Oberschicht 4 abgeschieden. Dazu werden Keramikpartikel mit einer konstanten Körnung ganz oder teilweise in dem Beschichtungsbrenner aufgeschmolzen und in den einzelnen Lagen 4a deckend übereinander auf der mehrlagigen Keramikschicht 3 abgeschieden.

Dabei werden für die Lagen 4a Keramikpartikel verwendet, die eine größere Körnung haben als die Keramikpartikel, welche für die letzte Lage 3c der mehrlagigen Keramikschicht 3 verwendet wurden. Auf diese Weise ist sichergestellt, dass auch die Lagen 4a der Oberschicht 4 eine ausreichende Porosität erhalten und damit sowohl eine hohe Wärmeisolationsfähigkeit als auch eine gute Haftung aneinander besitzen.

In der Figur 2 ist schematisch eine Vorrichtung 5 zum Beschichten eines Bauteils, beispielsweise der Turbinenschaufel 1 gezeigt. Die Vorrichtung 5 weist drei Fördereinheiten 6a-c auf, die jeweils Keramikpartikel mit einer unterschiedlich großen Körnung enthalten. Die Fördereinheiten 6a-c sind jeweils über Leitungen 7 mit einer Pulverweiche 8 verbunden und dafür ausgelegt, der Pulverweiche 8 Keramikpartikel zuzuführen. Die Pulverweiche 8 ist ausgebildet, die ihr zugeführten Keramikpartikel zu einem Beschichtungspulver mit einheitlicher Körnung zu vermischen. Dabei hängt die resultierende Körnung des Beschichtungspulvers von den Mengen und den Körnungen der jeweils von den Fördereinheiten 6a-c zugeführten Keramikpartikeln ab.

Die Pulverweiche 8 ist über eine Leitung 7 mit einem Pulverinjektör 9 verbunden. Der Pulverinjektor 9 ist so relativ zu einem Plasmabrenner 10 angeordnet, dass er einen Strom von Beschichtungspulver 11 in die Flamme 12 des Plasmabrenners 10 abgeben kann.

Die Vorrichtung 5 kann zusätzlich eine Steuereinheit aufweisen, welche die Zufuhr der Keramikpartikel aus den Fördereinheiten 6a-c, und die Funktion der Pulverweiche 8 und des Pulverinjektors 9 steuert. Die Steuerung kann auch dafür ausgelegt sein, in Abhängigkeit von der Körnung des Beschichtungspulvers die Leistung des Plasmabrenners zu regulieren, d.h. dessen Leistung bei einer größeren Körnung zu erhöhen, um ein ausreichendes Schmelzen der Keramikpartikel zu gewährleisten. Es können auch neben den drei gezeigten Fördereinheiten 6a-c noch weitere Fördereinheiten vorhanden sein.

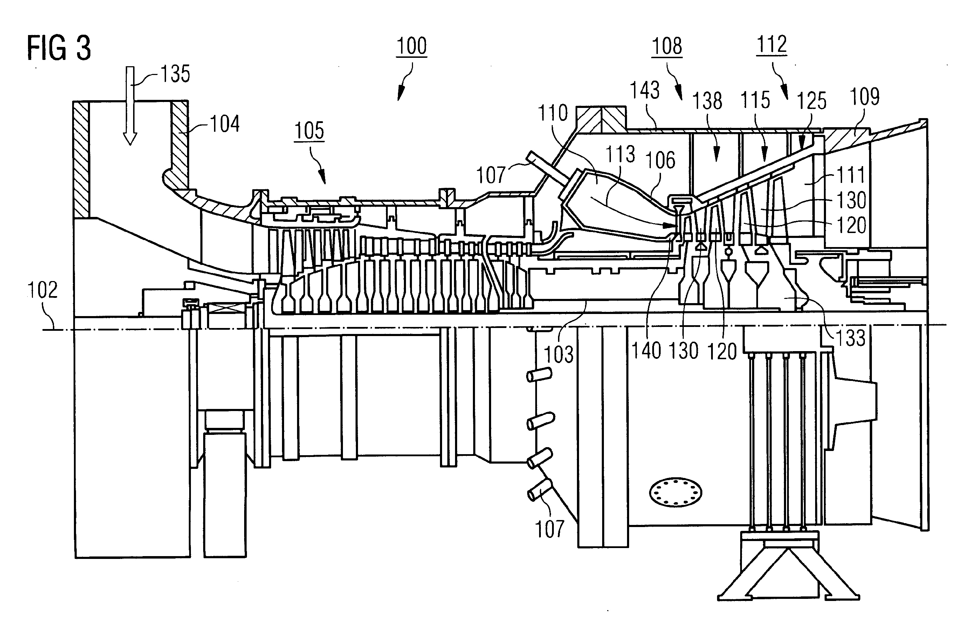

Die Figur 3 zeigt beispielhaft eine Gasturbine 100 in einem Längsteilschnitt.
Die Gasturbine 100 weist im Inneren einen um eine Rotationsachse 102 drehgelagerten Rotor 103 mit einer Welle 101 auf, der auch als Turbinenläufer bezeichnet wird.
Entlang des Rotors 103 folgen aufeinander ein Ansauggehäuse 104, ein Verdichter 105, eine beispielsweise torusartige Brennkammer 110, insbesondere Ringbrennkammer, mit mehreren koaxial angeordneten Brennern 107, eine Turbine 108 und das Abgasgehäuse 109.
Die Ringbrennkammer 110 kommuniziert mit einem beispielsweise ringförmigen Heißgaskanal 111. Dort bilden beispielsweise vier hintereinander geschaltete Turbinenstufen 112 die Turbine 108.
Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.
An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 110 auskleidenden Hitzeschildelementen am meisten thermisch belastet.
Um den dort herrschenden Temperaturen standzuhalten, können diese mittels eines Kühlmittels gekühlt werden.
Ebenso können Substrate der Bauteile eine gerichtete Struktur aufweisen, d.h. sie sind einkristallin (SX-Struktur) oder weisen nur längsgerichtete Körner auf (DS-Struktur).
Als Material für die Bauteile, insbesondere für die Turbinenschaufel 120, 130 und Bauteile der Brennkammer 110 werden beispielsweise eisen-, nickel- oder kobaltbasierte Superlegierungen verwendet.
Solche Superlegierungen sind beispielsweise aus der EP 1 204 776 B1, EP 1 306 454, EP 1 319 729 A1, WO 99/67435 oder WO 00/44949 bekannt; diese Schriften sind bzgl. der chemischen Zusammensetzung der Legierungen Teil der Offenbarung.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

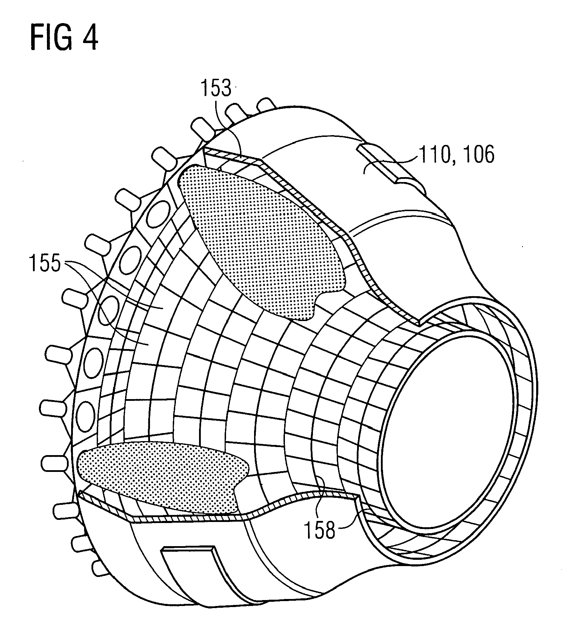

Die Figur 4 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.
Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).
Der Schaufelfuß 183 ist beispielsweise als Hammerkopf ausgestaltet. Andere Ausgestaltungen als Tannenbaum- oder Schwalbenschwanzfuß sind möglich.
Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.
Solche Superlegierungen sind beispielsweise aus der EP 1 204 776 B1, EP 1 306 454, EP 1 319 729 A1, WO 99/67435 oder WO 00/44949 bekannt; diese Schriften sind bzgl. der chemischen Zusammensetzung der Legierung Teil der Offenbarung.
Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.
Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.
Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.
Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).
Solche Verfahren sind aus der US-PS 6,024,792 und der EP 0 892 090 A1 bekannt; diese Schriften sind bzgl. des Erstarrungsverfahrens Teil der Offenbarung.

Ebenso können die Schaufeln 120, 130 Beschichtungen gegen Korrosion oder Oxidation aufweisen, z. B. (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1, die bzgl. der chemischen Zusammensetzung der Legierung Teil dieser Offenbarung sein sollen.
Die Dichte liegt vorzugsweise bei 95% der theoretischen Dichte.
Auf der MCrAlX-Schicht (als Zwischenschicht oder als äußerste Schicht) bildet sich eine schützende Aluminiumoxidschicht (TGO = thermal grown oxide layer).

Vorzugsweise weist die Schichtzusammensetzung Co-30Ni-28Cr-8Al-0,6Y-0,7Si oder Co-28Ni-24Cr-10Al-0,6Y auf. Neben diesen kobaltbasierten Schutzbeschichtungen werden auch vorzugsweise nickelbasierte Schutzschichten verwendet wie Ni-10Cr-12Al-0,6Y-3Re oder Ni-12Co-21Cr-11A1-0,4Y-2Re oder Ni-25Co-17Cr-10Al-0,4Y-1,5Re.

Auf der MCrAlX kann noch eine Wärmedämmschicht vorhanden sein, die vorzugsweise die äußerste Schicht ist, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Die Wärmedämmschicht bedeckt die gesamte MCrAlX-Schicht.

Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrAlX-Schicht.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

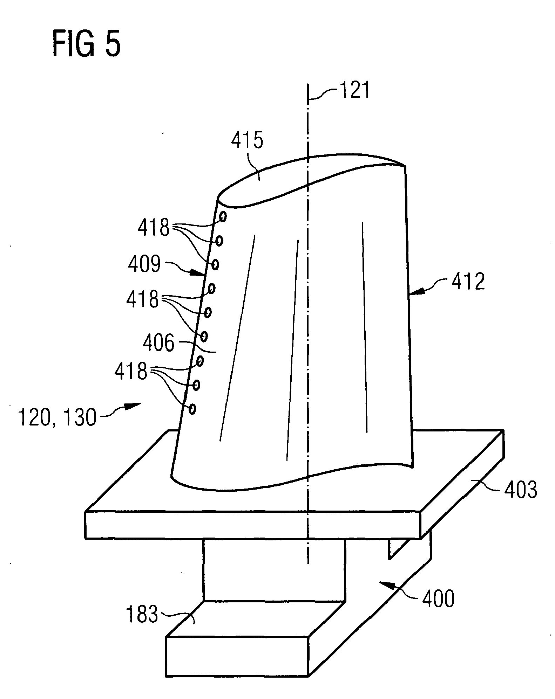

Die Figur 5 zeigt eine Brennkammer 110 der Gasturbine 100. Die Brennkammer 110 ist beispielsweise als so genannte Ringbrennkammer ausgestaltet, bei der eine Vielzahl von in Umfangsrichtung um eine Rotationsachse 102 herum angeordneten Brennern 107 in einen gemeinsamen Brennkammerraum 154 münden, die Flammen 156 erzeugen. Dazu ist die Brennkammer 110 in ihrer Gesamtheit als ringförmige Struktur ausgestaltet, die um die Rotationsachse 102 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen.

Aufgrund der hohen Temperaturen im Inneren der Brennkammer 110 kann zudem für die Hitzeschildelemente 155 bzw. für deren Halteelemente ein Kühlsystem vorgesehen sein. Die Hitzeschildelemente 155 sind dann beispielsweise hohl und weisen ggf. noch in den Brennkammerraum 154 mündende Kühllöcher (nicht dargestellt) auf.

Jedes Hitzeschildelement 155 aus einer Legierung ist arbeitsmediumsseitig mit einer besonders hitzebeständigen Schutzschicht (MCrAlX-Schicht und/oder keramische Beschichtung) ausgestattet oder ist aus hochtemperaturbeständigem Material (massive keramische Steine) gefertigt.
Diese Schutzschichten können ähnlich der Turbinenschaufeln sein, also bedeutet beispielsweise MCrAlX: M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf). Solche Legierungen sind bekannt aus der EP 0 486 489 B1, EP 0 786 017 B1, EP 0 412 397 B1 oder EP 1 306 454 A1, die bzgl. der chemischen Zusammensetzung der Legierung Teil dieser Offenbarung sein sollen.

Auf der MCrAlX kann noch eine beispielsweise keramische Wärmedämmschicht vorhanden sein und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen.

Wiederaufarbeitung (Refurbishment) bedeutet, dass Turbinenschaufeln 120, 130, Hitzeschildelemente 155 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse in der Turbinenschaufel 120, 130 oder dem Hitzeschildelement 155 repariert. Danach erfolgt eine Wiederbeschichtung der Turbinenschaufeln 120, 130, Hitzeschildelemente 155 und ein erneuter Einsatz der Turbinenschaufeln 120, 130 oder der Hitzeschildelemente 155.

## Patentansprüche

1. Verfahren zum Beschichten eines Bauteils (1) mit einer mehrlagigen Keramikschicht (3),
bei dem die einzelnen Lagen (3a-c) der Keramikschicht (3) auf dem Bauteil (1) übereinander aufgebracht werden,
indem Keramikpartikel einem Beschichtungsbrenner zugeführt, von diesem ganz oder teilweise aufgeschmolzen und auf dem Bauteil (1) abgeschieden werden,
**dadurch gekennzeichnet, dass**
dem Beschichtungsbrenner von Lage (3a) zu Lage (3b) Keramikpartikel mit einer zunehmend größeren Körnung zugeführt werden.

2. Verfahren nach Anspruch 1,
**dadurch gekennzeichnet, dass**
die Leistung des Beschichtungsbrenners während des Aufbringens der einzelnen Lagen (3a-c) der Keramikschicht (3) kontinuierlich an die Körnung der Keramikpartikel angepasst wird.

3. Verfahren nach Anspruch 2,
**dadurch gekennzeichnet, dass**
ein Plasmabrenner als Beschichtungsbrenner verwendet wird.

4. Verfahren nach Anspruch 3,
**dadurch gekennzeichnet, dass**
die Leistung des Plasmabrenners durch eine Variation der Stromstärke und/oder des Wasserstoffgasflusses und/oder der Argongasrate angepasst wird.

5. Verfahren nach einem der vorhergehenden Ansprüche,
**dadurch gekennzeichnet, dass**
die einzelnen Lagen (3a-c) der Keramikschicht mit einer Dicke im Bereich zwischen 10 und 100 µm, insbesondere zwischen 20 bis 50 µm aufgebracht werden.

6. Verfahren nach einem der vorhergehenden Ansprüche,
**dadurch gekennzeichnet, dass**
die mehrlagige Keramikschicht (3) mit einer Gesamtdicke im Bereich zwischen 100 bis 1000 µm,
insbesondere zwischen 200 und 700 µm und besonders bevorzugt zwischen 250 und 650 µm aufgebracht wird.

7. Verfahren nach einem der Ansprüche 1 bis 6,
**dadurch gekennzeichnet, dass**
dem Beschichtungsbrenner für die erste Lage (3a) Keramikpartikel mit einer Körnung von
- 75 µm + 10 µm oder - 53 µm + 11 µm oder - 90 µm + 11 µm zugeführt werden.

8. Verfahren nach einem der Ansprüche 1 bis 7,
**dadurch gekennzeichnet, dass**
dem Beschichtungsbrenner für die letzte Lage (3c) Keramikpartikel mit einer Körnung von - 106 µm + 11 µm oder - 125 µm + 45 µm oder - 150 µm + 75 µm zugeführt werden.

9. Verfahren nach einem der Ansprüche 1 bis 7,
**dadurch gekennzeichnet, dass**
dem Beschichtungsbrenner ein Gemisch von Keramikpartikel mit mindestens zwei verschiedenen Körnungen zugeführt wird.

10. Verfahren nach einem der Ansprüche 1 bis 9,
**dadurch gekennzeichnet, dass**
vor dem Beschichten eine mehrlagige Unterschicht (2) auf dem Bauteil (1) aufgebracht wird,
indem Keramikpartikel mit einer konstanten Körnung einem Beschichtungsbrenner zugeführt, von diesem ganz oder teilweise aufgeschmolzen und auf dem Bauteil (1) in einzelnen Lagen (2a) deckend übereinander aufgebracht werden.

11. Verfahren nach Anspruch 10,
**dadurch gekennzeichnet, dass**
dem Beschichtungsbrenner für die Ausbildung der Unterschicht (2) Keramikpartikel mit einer konstanten Körnung von - 75 µm + 10 µm oder - 53 µm + 11 µm oder - 90 µm + 11 µm zugeführt werden.

12. Verfahren nach einem der Ansprüche 10 oder 11,
**dadurch gekennzeichnet, dass**
die einzelnen Lagen (2a) der Unterschicht (2) mit einer Dicke im Bereich zwischen 10 und 100 µm, insbesondere zwischen 20 bis 50 µm aufgebracht werden.

13. Verfahren nach einem der Ansprüche 10 bis 12,
**dadurch gekennzeichnet, dass**
die Unterschicht (2) mit einer Gesamtdicke im Bereich zwischen 150 und 450 µm aufgebracht wird.

14. Verfahren nach einem der Ansprüche 1 bis 13,
**dadurch gekennzeichnet, dass**
auf der mehrlagigen Keramikschicht (3) eine mehrlagige Oberschicht (4) aufgebracht wird,
indem Keramikpartikel einem Beschichtungsbrenner zugeführt, von diesem ganz oder teilweise aufgeschmolzen und auf der mehrlagigen Keramikschicht (3) in einzelnen Lagen (4a) deckend übereinander aufgebracht werden,
wobei die Keramikpartikel für die Oberschicht (4) eine größere Körnung als die Keramikpartikel haben,
welche dem Beschichtungsbrenner beim Aufbringen der letzten Lage (3c) der mehrlagigen Keramikschicht (3) zugeführt werden.

15. Mehrlagige Keramikschicht (3),
bei der einzelne Lagen (3a-c) deckend übereinander angeordnet sind,
wobei die einzelnen Lagen (3a-c) aus teilweise miteinander verschmolzenen Keramikpartikeln bestehen,
**dadurch gekennzeichnet, dass**
die Keramikpartikel von Lage (3a) zu Lage (3b) zunehmend eine größere Körnung aufweisen.

16. Mehrlagige Keramikschicht (3) nach Anspruch 15,
**dadurch gekennzeichnet, dass**
die Lagen (3a-c) eine Dicke im Bereich zwischen 10 und 100 µm, insbesondere zwischen 20 und 50 µm aufweisen.

17. Mehrlagige Keramikschicht (3) nach einem der Ansprüche 15 oder 16,
**dadurch gekennzeichnet, dass**
ihre Gesamtdicke im Bereich zwischen 100 bis 1000 µm, insbesondere zwischen 200 und 700 µm und besonders bevorzugt zwischen 250 und 650 µm liegt.

18. Mehrlagige Keramikschicht (3) nach einem der Ansprüche 15 bis 17,
**dadurch gekennzeichnet, dass**
die Keramikpartikel der ersten Lage (3a) eine Körnung von - 75 µm + 10 µm oder - 53 µm + 11 µm oder - 90 µm + 11 µm haben.

19. Mehrlagige Keramikschicht (3) nach einem der Ansprüche 15 bis 18,
**dadurch gekennzeichnet, dass**
die Keramikpartikel der letzten Lage (3c) eine Körnung von - 106 µm + 11 µm oder - 125 µm + 45 µm oder - 150 µm + 75 µm haben.

20. Mehrlagige Keramikschicht (3) nach einem der Ansprüche 15 bis 17,
**dadurch gekennzeichnet, dass**
die Keramikpartikel mindestens zwei verschiedenen Körnungen haben.

21. Mehrlagige Keramikschicht (3) nach einem der Ansprüche 15 bis 20,
**dadurch gekennzeichnet, dass**
sie auf einer Unterschicht (2), welche aus einzelnen deckend übereinander angeordneten Lagen (2a) besteht,
wobei die einzelnen Lagen (2a) aus teilweise miteinander verschmolzenen Keramikpartikeln mit einer konstanten Körnung bestehen, aufgebracht ist.

22. Mehrlagige Keramikschicht (3) nach Anspruch 21,
**dadurch gekennzeichnet, dass**
die Keramikpartikel der Unterschicht (2) eine konstante Körnung von - 75 µm + 10 µm oder - 53 µm + 11 µm oder - 90 µm + 11 µm haben.

23. Mehrlagige Keramikschicht (3) nach einem der Ansprüche 21 oder 22,
**dadurch gekennzeichnet, dass**
die Lagen (2a) der Unterschicht (2) eine Dicke im Bereich zwischen 10 bis 100 µm, insbesondere zwischen 20 bis 50 µm aufweisen.

24. Mehrlagige Keramikschicht (3) nach einem der Ansprüche 21 bis 23,
**dadurch gekennzeichnet, dass**
die Gesamtdicke der Unterschicht (2) zwischen 150 und 450 *µ*m beträgt.

25. Mehrlagige Keramikschicht (3) nach einem der Ansprüche 15 bis 24,
**dadurch gekennzeichnet, dass**
auf der mehrlagigen Keramikschicht (3) eine mehrlagige Oberschicht (4) aufgebracht ist,
welche aus einzelnen deckend übereinander angeordneten Lagen (4a) besteht,
wobei die einzelnen Lagen (4a) aus teilweise miteinander verschmolzenen Keramikpartikeln bestehen, deren Körnung größer als die Körnung der Keramikpartikel der letzten Lage (3c) der mehrlagigen Keramikschicht (3) ist.

26. Bauteil (1),
insbesondere ein Bauteil einer Gasturbine,
das mit einer mehrlagigen Keramikschicht (3) nach einem der Ansprüche 15 bis 25 versehen ist.
